# EUROPÄISCHE PATENTSCHRIFT

(11) **EP 0 963 069 B1**
(45) Veröffentlichungstag und Bekanntmachung des Hinweises auf die Patenterteilung: **09.03.2005**
(21) Anmeldenummer: 99440093.5
(22) Anmeldetag: 23.04.1999
(51) Int. Cl.: H04J 3/07, H04J 3/06

(54) **Desynchronisiereinrichtung für ein synchrones digitales Nachrichtenübertragungssystem**
Desynchronisation device for synchronous digital transmission system
Système de désynchronisation pour système de transmission digitale synchrone

(30) Priorität: 08.05.1998 DE 19820572
(43) Veröffentlichungstag der Anmeldung: 08.12.1999
(73) Patentinhaber: ALCATEL, 75008 Paris (FR)
(72) Erfinder: Wolf, Michael, Dr., 74395 Mundelsheim (DE)
(74) Vertreter: Rausch, Gabriele, Dr.

(56) Entgegenhaltungen:
- US-A- 5 361 263
- BELLAMY J C: "DIGITAL NETWORK SYNCHRONIZATION" IEEE COMMUNICATIONS MAGAZINE, IEEE SERVICE CENTER. PISCATAWAY, N.J, US, Bd. 33, Nr. 4, 1. April 1995 (1995-04-01), Seiten 70-83, XP000506869 ISSN: 0163-6804
- RUAN A Q ET AL: "An improved desynchronizer with reduced waiting time jitter for digital TDM systems" COMMUNICATIONS, COMPUTERS AND SIGNAL PROCESSING, 1991., IEEE PACIFIC RIM CONFERENCE ON VICTORIA, BC, CANADA 9-10 MAY 1991, NEW YORK, NY, USA,IEEE, US, 9. Mai 1991 (1991-05-09), Seiten 297-300, XP010039436 ISBN: 0-87942-638-1

## Beschreibung

Die Erfindung betrifft eine Desynchronisiereinrichtung für ein synchrones digitales Nachrichtenübertragungssystem nach dem Oberbegriff des Anspruchs 1 und ein Verfahren zum Erzeugen eines jitterreduzierten Ausgangssignals aus einem digitalen synchronen Eingangssignal nach dem Oberbegriff des Anspruchs 6.

Synchrone digitale Nachrichtenübertragungssysteme arbeiten nach den Empfehlungen der ITU-T für SDH (synchronous digital hierarchy) oder SONET (synchronous optical network). Nach der Empfehlung ITU-T G.707 von 3/96, S.6, werden zu übertragende Nachrichtensignale in virtuelle Container verpackt und in ein synchrones Transportmodul verschachtelt. Das synchrone Transportmodul wird dann übertragen. Für jeden möglichen virtuellen Container ist in der Empfehlung eine Bitrate festgelegt.

Bei der Übertragung können sich niederfrequente Phasenschwankungen aufaddieren, die durch die Zwischenspeicherung in verschiedenen Pufferspeichern des Nachrichtenübertragungssystem verursacht werden. Solche niederfrequente Phasenschankungen werden als Wander bezeichnet und können zu einem Überlauf von Pufferspeichern und damit verbundenem Datenverlust führen. Eine Möglichkeit, solchen Wander zu reduzieren oder zu vermeiden liegt darin, abweichend von der ITU-T Empfehlung für die virtuellen Container eine etwas höhere oder niedrigere Bitrate zu verwenden. Durch diese Maßnahme wird erreicht, daß der Füllstand von Pufferspeichern zwischengeschalteter Netzelemente in den Bereich der unteren oder oberen Grenze verlagert und festgehalten wird und so ein Aufaddieren von Wander vermindert wird. Auf der anderen Seite wird die Anzahl von Pointeraktionen erhöht, um den Unterschied in der Bitrate auszugleichen. Daraus resultiert vermehrt Jitter.

Aus dem Konferenzartikel "SONET/SDH Pointer Processor Implementation" von M. Klein und R. Urbansky, 1994 IEEE GLOBECOM Communications: The Global Bridge, San Francisco, 28.11 - 2.12.1994, S.655-660, ist eine Synchronisiereinrichtung für SDH- oder SONET-Systeme bekannt, die aus plesiochronen oder pseodo-synchronen digitalen Eingangssignalen ein synchrones Ausgangssignal erzeugt. Das Ausgangssignal wird über das Nachrichtenübertragungssystem transportiert und am anderen Ende mittels einer Desynchronisiereinrichtung wieder zu den ursprünglichen plesiosynchronen oder pseudo-synchronen Nachrichtensignalen zusammengesetzt. Die Desynchronisiereinrichtung weist einen Pufferspeicher auf, in dem die empfangenen Signale zwischengespeichert und mit einem regenerierten Takt wieder ausgelesen werden, um das ursprüngliche Nachrichtensignal wieder zu erhalten. Als Maß zum Abgleichen des regenerierten Taktes dient der Füllstand des Pufferspeichers, der mittels eines Phasenkomparators aus Schreib- und Lesetakt des Pufferspeichers bestimmt wird. Jitter wird durch Tiefpaßfilterung des regenerierten Taktes reduziert.

Aus der US 5,361,263 ist ein Pointer-Prozessor bekannt, der dazu dient, ein empfangenes Signal durch Ausführen von Pointer-Aktionen an einen lokalen Takt anzupassen.

In dem Artikel "Digital Network Synchronization" von J. Bellamy, IEEE Communications Magazine April 1995, Seiten 70-83, werden die Grundlagen der Taktsynchronisierung in digitalen Netzen wie SONET beschrieben. Dabei wird auch das Prinzip eines Desynchronisierers, wie er von Urbansky beschrieben ist, erläutert.

Aus dem Konferenzartikel "An Improved Desynchronizer with Reduced Waiting Time Jitter for Digital TDM Systems" von A. Ruan et al., Proc. Computotions and Signal Processing 1991, IEEE May 1991 New York, Seiten 297-300, wird ein Desynchronizer für PDH-Signale vorgestellt, der von der bei PDH-Signalen bekannten, nominellen Stopfrate Gebrauch macht, um Wartejitter zu reduzieren. Da bei synchronen Netzen eine solche nominelle Stopfrate nicht vorkommt, ist dieser Ansatz dort unbrauchbar.

Die von Urbanski bekannte Desynchronisiereinrichtung ist jedoch ungeeignet, den von Pointeraktionen bewirkten niederfrequenten Jitter wirksam zu reduzieren.

Aufgabe der Erfindung ist es daher, eine Desynchronisiereinrichtung für ein synchrones digitales Nachrichtenübertragungssystem anzugeben, die in der Lage ist, durch Pointeraktionen bewirkten Jitter wirksam zu unterdrücken. Eine weitere Aufgabe der Erfindung liegt darin, ein Verfahren zum Erzeugen eines jitterreduzierten Ausgangssignals aus einem digitalen synchronen Eingangssignal anzugeben.

Die Aufgabe wird hinsichtlich der Desynchronisiereinrichtung gelöst durch die Merkmale des Anspruchs 1 und hinsichtlich des Verfahrens durch die Merkmale des Anspruchs 6. Vorteilhafte Ausgestaltungen sind in den abhängigen Ansprüchen angegeben.

Im folgenden wird die Erfindung anhand der Figuren 1 bis 3 in zwei Ausführungsbeispielen erläutert. Es zeigt:
- Figur 1: ein Blockschaltbild einer erfindungsgemäßen Desynchronisiereinrichtung in einem ersten Ausführungsbeispiel,
- Figur 2: ein Blockschaltbild einer erfindungsgemäßen Desynchronisiereinrichtung in einem zweiten Ausführungsbeispiel und
- Figur 3: ein Flußdiagramm des erfindungsgemäßen Verfahrens.

Die Erfindung basiert darauf, daß ein an einer Desynchronisiereinrichtung empfangenes Eingangssignal virtuelle Container mit gegenüber dem standardisierten Wert verstimmter Bitrate enthält. Unter der Annahme, daß die Bitrate der virtuellen Container zwar gegenüber dem standardisierten Wert verstimmt jedoch konstant ist, liegt der Erfindung die Erkenntnis zugrunde, daß die virtuellen Container mit einer stetigen Folge von Pointeraktionen, sogenannten "pointer justifications", empfangen werden. Der zeitliche Abstand zwischen den Pointeraktionen muß dabei allerdings nicht notwendigerweise konstant sein. Ausgehend von dieser Erkenntnis, besteht ein Grundgedanke der Erfindung darin, eine digitale Mittelwertbildung über das Intervall zwischen zwei Pointeraktionen durchzuführen und diesen Mittelwert als Maß für einen Abgleich eines Taktgenerators zu verwenden, der zur Erzeugung eines regenerierten Taktsignals als Lesetaktsignal dient.

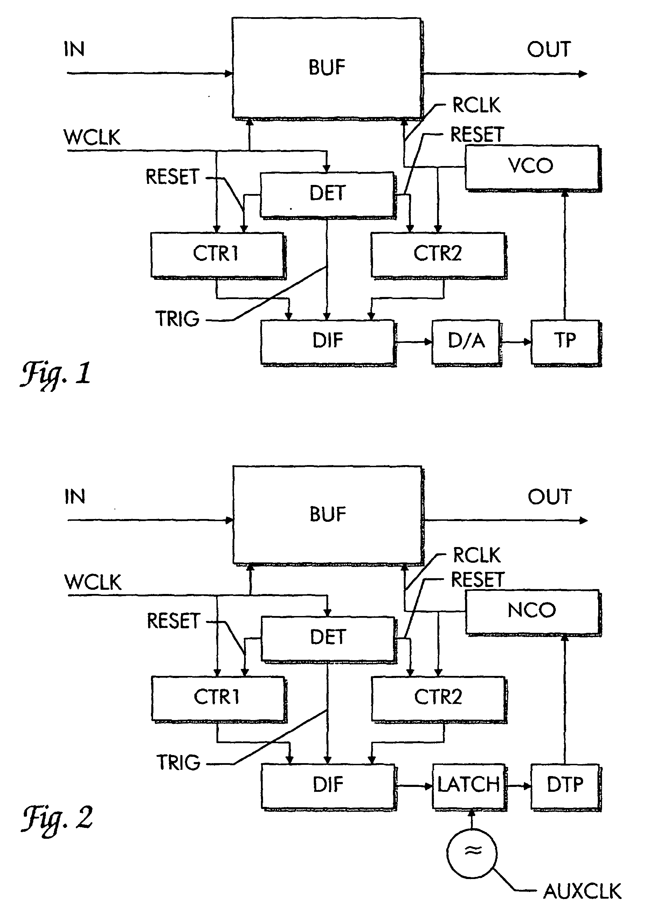

In Figur 1 ist ein erstes Ausführungsbeispiel einer nach diesem Prinzip arbeitenden Desynchronisiereinrichtung abgebildet. Die Desynchronisiereinrichtung empfängt an einem Eingang IN ein synchrones digitales Nachrichtensignal, das über ein synchrones digitales Nachrichtenübertragungssystem übertragen wurde. Das Nachrichtensignal besteht aus synchronen Transportmodulen, das sind Rahmenstrukturen mit einem Kopfteil und einer Nutzlast. In der Nutzlast der synchronen Transportmodule können virtuelle Container verschachtelt sein, die wiederum aus einem Kopfteil und einer Nutzlast bestehen. Die virtuellen Container können frei in der Nutzlast der Transportmodule positioniert sein. Ein Zeiger (Pointer) im Kopfteil der synchronen Transportmodule adressiert den Container. Um Bitratenschwankungen auszugleichen, werden Container aufeinanderfolgender Transportmodule relativ zueinander in ihrer Positionierung im Transportmodul verschoben. Dies wird als Pointeraktion bezeichnet, da der Zeiger, der den Container adressiert, verändert wird. Aufgrund von Pointeraktionen entsteht sogenannter Pointerjitter, der in der Desynchronisiereinrichtung reduziert werden soll.

Die in Figur 1 dargestellte Desynchronisiereinrichtung arbeitet wie folgt: Die Nutzlast des Nachrichtensignals wird mit einem Schreibtakt WCLK in einen Pufferspeicher BUF eingeschrieben. Der Schreibtakt WCLK ist ein Taktsignal, das aus dem empfangenen Nachrichtensignal abgeleitet ist. Vorteilhaft handelt es sich dabei um ein Taktsignal mit Lücken für die Kopfteile der Rahmen. D.h. während ein Kopfteil empfangen wird, tritt eine Lücke im Taktsignal auf, so daß der Kopfteil nicht in den Pufferspeicher BUF eingeschrieben wird. Der Schreibtakt wird von einer in der Figur 1 nicht gezeigten Taktableitungsschaltung erzeugt.

In der Nutzlast des empfangenen Nachrichtensignals ist ein Nutzsignal enthalten, beispielsweise ein plesiochrones oder pseudo-synchrones Nachrichtensignal, welches mit seiner ursprünglichen Bitrate wieder gewonnen werden soll. Um das Nutzsignal wiederzugewinnen, wird der Pufferspeicher BUF mit einem regenerierten Taktsignal RCLK ausgelesen.

Das regenerierte Taktsignal wird von einem abstimmbaren Oszillator VCO, beispielsweise einem spannungsgesteuerten Oszillator, erzeugt.

Der abstimmbare Oszillator VCO wird mit einem Abstimmsignal abgestimmt. Dieses Abstimmsignal ist erfindungsgemäß vom mittleren Pufferfüllstand zwischen zwei Pointeraktionen abhängig. Im Ausführungsbeispiel wird das Abstimmsignal wie folgt erzeugt: Ein erster Zähler CTR1 zählt die Pulse des Schreibtaktsignals WCLK. Ein zweiter Zähler zählt die Pulse der regenerierten Taktsignals RCLK. Beide Zähler werden von einer Detektiervorrichtung DET, die das Auftreten von Pointeraktionen detektiert, immer dann zurückgesetzt, wenn eine Pointeraktion auftritt. Ein Addierer DIF bildet zu diesem Zeitpunkt die Differenz der beiden Zählerstände. Dazu wird der Addierer DIF von der Detektiervorrichtung DET über eine Triggerleitung TRIG bei Auftreten einer Pointeraktion getriggert. Der so gebildete Differenzwert wird mittels eines Digital/Analog-Konverters in ein Spannungssignal umgesetzt. Das Spannungssignal kann nun noch vorteilhaft mit einem Tiefpaßfilter TP gefiltert werden. Das gefilterte Spannungssignal dient als Abstimmsignal für den abstimmbaren Oszillator.

Die Auflösung der Phase ist ein Bit, d.h. ein 1 Ul. Dies ist damit auch der maximale Wander, der durch die erfindungsgemäßen Maßnahmen entstehen kann. Der Mittelwert über das Intervall zwischen zwei Pointeraktionen ist ein Maß dafür, wieviel die effektive Bitrate empfangener virtueller Container von der in ITU-T G.707, S.6, festgelegten Bitrate abweicht, also für den Frequenzoffset der Synchronisiereinrichtung.

In dem ersten Ausführungsbeispiel wird ermittelt, um wieviel Taktzyklen im Mittel der Lesetakt RCLK vom Schreibtakt WCLK abweicht. Das Mittelungsintervall ist das Intervall zwischen zwei Pointeraktionen. Entweder handelt es sich dabei jeweils um zwei aufeinanderfolgende Pointeraktionen, oder aber es wird ein längeres Mittelungsintervall, z.B. das Intervall zwischen jeder zehnten Pointeraktion, verwendet. Die Detektiervorrichtung bestimmt das Intervall und triggert die Differenzbildung zwischen der akkumulierten Schreibtaktphase und der akkumulierten Lesetaktphase.

Dieses Differenzsignal wird verwendet, eine Phasenregelschleife zu betreiben.

Es handelt sich also bei der beschriebenen Takterzeugungsschaltung um einen digitalen Phasenkomparator mit Mittelwertbildung, wobei das Mittelungsintervall durch die Eigenschaften des Eingangssignals bestimmt wird (Pointeraktionen im Eingangssignal) und somit eine variable Länge hat. Dadurch wird Pointerjitter, der von einem konstanten Offset der effektiven Bitrate der empfangenen virtuellen Container herrührt, völlig beseitigt.

Gestartet wird die Desynchronisiereinrichtung, indem die Phase des Lesetaktsignals RCLK zum Zeitpunkt einer Pointeraktion, die von der Detektiervorrichtung erkannt wird, in eine vorbestimmte Phasenlage bezüglich des Schreibtaktsignals WCLK gebracht wird. Dies ist in der Figur 1 nicht gezeigt.

Ein zweites Ausführungsbeispiel einer erfindungsgemäßen Desynchronisiereinrichtung ist in Figur 2 als Blockdiagramm schematisch dargestellt. Das zweite Ausführungsbeispiel unterscheidet sich von dem in Figur 1 gezeigten ersten Ausführungsbeispiel dadurch, daß der von dem Addierer DIF gebildete Differenzwert in einem Latch LATCH zwischengespeichert und mit einem von einem Hilfsoszillator AUXCLK erzeugten Hilfstakt periodisch wieder ausgelesen wird. Das so erzeugte Abtastsignal wird duch einen digitalen Tiefpaßfilter DTP gefiltert und dient als Abstimmsignal für einen numerisch kontrollierten Oszillator NCO. Der numerisch kontrollierte Oszillator verwendet den hochstabilen Systemtakt aus dem synchronen digitalen Nachrichtenübertragungssystem, der z.B. 2 MBit/s betragen kann, und realisiert die Taktanpassung mittels umschaltbarer Teiler.

Daraus ergibt sich der Vorteil, daß kein teurer Quarzoszillator mit hoher Phasenstabilität in der Schaltung benötigt wird und hohe Integrationszeiten, z.B. eine Integration über jeweils mehrere Pointeraktionen, realisiert werden können. Wenn lange Integrationszeiten für die Mittelwertbildunbg erreicht werden sollen, wird ein Taktgenerator mit hoher Phosensiabilität benötigt. Im zweiten Ausführungsbeispiel wird mittels des numerisch kontrollierten Oszillators NCO dazu der hochstabile Systemtakt (Referenztakt) aus dem synchronen digitalen Nachrichtenübertragungssystem verwendet und mittels umschaltbarer Teiler im NCO abgestimmt um den Lesetakt für den Pufferspeicher zu generieren. Dadurch werden lange Integrationszeiten ermöglicht.

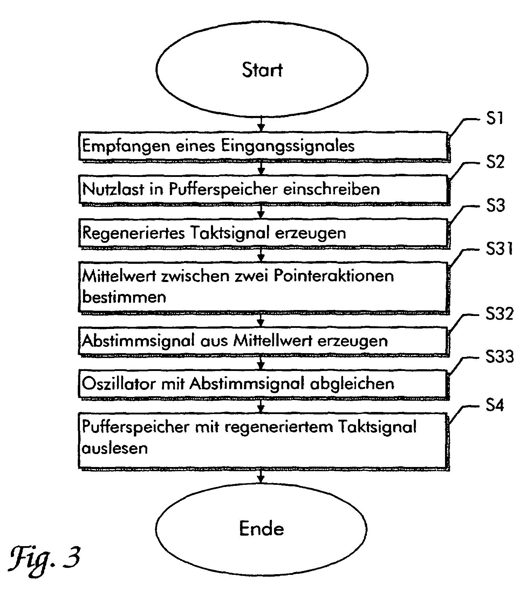

In Figur 3 ist ein Flußdiagramm des erfindungsgemäßen Verfahrens dargestellt. Das Verfahren hat die folgenden Schritte:
- S1:: An einem Eingang empfängt die Desynchronisiereinrichtung ein synchrones digitales Eingangssignal. Es besteht aus synchronen Transportmodulen, in deren Nutzlast ein oder mehrere virtuelle Container geschachtelt sind. Die Container werden durch einen Zeiger (Pointer) im Kopfteil der Transportmodule adressiert und sind innerhalb der Nutzlast frei positionierbar.
- S2:: Die Nutzlast des Eingangssignals wird nun mit einem Schreibtakt in einen Pufferspeicher der Desynchronisiereinrichtung eingeschrieben. Der Schreibtakt ist mit einer Taktableitungsschaltung von dem Eingangssignal abgeleitet. Er kann Lücken während des Empfangs von Kopfteilen haben.
- S3:: Mittels eines abstimmbaren Oszillators wird ein regeneriertes Taktsignals erzeugt. Dazu wird in einem ersten Zwischenschritt
S31 ein Mittelwert über das Intervall zwischen zwei Pointeraktionen des Eingangssignals bestimmt, dann wird ein einem zweiten Zwischenschritt
S32 aus dem Mittelwert ein Abstimmsignal erzeugt, entweder in Form eines Spannungssignals mittels eines Digital/Analog-Konverters oder in Form eines Digitalsignals. Das Abstimmsignal kann vorteilhaft zusätzlich noch tiefpaßgefiltert werden. In einem dritten Zwischenschritt
S33 wird der abstimmbare Oszillator mit dem Abstimmsignal abgeglichen.
- S4:: Um das Nutzsignal aus dem Eingangssignal zurückzugewinnen, wird der Pufferspeicher mit dem regenerierten Taktsignal ausgelesen.

## Patentansprüche

1. Desynchronisiereinrichtung für ein synchrones digitales Nachrichtenübertragungssystem zum Gewinnen eines Nutzsignals (OUT) aus einem synchronen digitalen Eingangssignal (IN), die
- einen Pufferspeicher (BUF) zum Zwischenspeichern des Eingangssignals (IN),
- ein Schreibmittel zum Einschreiben des Eingangssignals in den Pufferspeicher (BUF),
- ein Takterzeugungsmittel zum Erzeugen eines regenerierten Taktsignals (RCLK) und
- ein Lesemittel zum Auslesen des Pufferspeichers (BUF) mit dem regenerierten Taktsignal (RCLK) aufweist,
**dadurch gekennzeichnet,**
**daß** das Takterzeugungsmittel ein Berechnungsmittel (DET, DIF, CTR1, CTR2) zum Bestimmen eines Mittelwertes über das Intervall zwischen zwei Pointeraktionen des Eingangssignals (IN) und zum Ableiten eines Abstimmsignals aus dem Mittelwert enthält, das dazu dient, das regenerierte Taktsignal (RCLK) abzugleichen.

2. Desynchronisiereinrichtung nach Anspruch 1, bei der zusätzlich ein Tiefpaßfilter (TP; DTP) zum Filtern des aus dem Mittelwert abgeleiteten Abstimmsignals vorgesehen ist.

3. Desynchronisiereinrichtung nach Anspruch 1, bei der das Berechnungsmittel folgende Baugruppen enthält:
- eine Detektiervorrichtung (DET) zum Erkennen von im Eingangssignal auftretenden Pointeraktionen,
- einen ersten Zähler (CTR1) zum Zählen der Pulse eines Schreibtaktsignals (WCLK),
- einen zweiten Zähler (CTR2) zum Zählen der Pulse des regenerierten Taktsignals (RCLK), und
- einen Addierer (DIF) zum Subtrahieren der Zählerstände der beiden Zähler (CTR1, CTR2) um einen Differenzwert zu bilden,
wobei die beiden Zähler jeweils über eine Rücksetzleitung mit der Detektiervorrichtung (DET) verbunden sind, so daß beide Zöhler (CTR1, CTR2) bei Auftreten einer Pointeraktion zurückgesetzt werden.

4. Desynchronisiereinrichtung nach Anspruch 3, bei der das Takterzeugungsmittel einen spannungsgesteuerten Oszillator (VCO) und einen Digital/Analog-Konverter (D/A) zum Erzeugen des Abstimmsignals aus dem Differenzwert enthält.

5. Desynchronisiereinrichtung nach Anspruch 3, bei der das Takterzeugungsmittel einen numerisch kontrollierten Oszillator (NCO) enthält.

6. Verfahren zum Gewinnen eines Nutzsignals (OUT) aus einem synchronen digitalen Eingangssignal (IN) mit folgenden Schritten:
- Empfangen des synchronen digitalen Eingangssignals (IN) an einer Desynchronisiereinrichtung,
- Einschreiben einer Nutzlast des Eingangssignals (IN) in einen Pufferspeicher (BUF) der Desynchronisiereinrichtung,
- Erzeugen eines regenerierten Taktsignals (RCLK) und
- Auslesen des Pufferspeichers (BUF) mit dem regenerierten Taktsignal (RCLK) um das Nutzsignal (OUT) zu gewinnen,
**gekennzeichnet durch** folgende Schritte:
- Bestimmen eines Mittelwertes über das Intervall zwischen zwei Pointeraktionen des Eingangssignals(IN),
- Ableiten eines Abstimmsignals aus dem Mittelwert und
- Abgleichen des regenerierten Taktsignals mit dem Abstimmsignal.

## Claims

1. Desynchronisation device for a synchronous digital transmission system for obtaining a useful signal (OUT) from a synchronous digital input signal (IN), said device having
- a buffer memory (BUF) for temporarily storing the received signal (IN),
- a means of writing for writing the input signal into the buffer memory (BUF),
- a means of clock generation for producing a regenerated clock signal (RCLK) and
- a means of reading for reading out the buffer memory (BUF) with the regenerated clock signal (RCLK),
**characterized in that**
the clock generation means contains a means of calculation (DET, DIF, CTR1, CTR2) for determining a mean value over the interval between two pointer actions of the input signal (IN) and for deriving from the mean value a tuning signal, which is used to adjust the regenerated clock signal (RCLK).

2. Desynchronisation device according to Claim 1, in which a low-pass filter (TP; DTP) is additionally provided for filtering the tuning signal derived from the mean value.

3. Desynchronisation device according to Claim 1, in which the means of calculation contains the following modules:
- a detection device (DET) for detecting pointer actions occurring in the input signal,
- a first counter (CTR1) for counting the pulses of a write clock signal (WCLK),
- a second counter (CTR2) for counting the pulses of the regenerated clock signal (RCLK), and
- an adder (DIF) for subtracting the counter readings of the two counters (CTR1, CTR2) to form a difference value, each of the counters being linked via a reset line to the detection device (DET), so that both counters (CTR1, CTR2) are reset when a pointer action occurs.

4. Desynchronisation device according to Claim 3, where the means of clock generation contains a voltage-controlled oscillator (VCO) and a digital/analog converter (D/A) for generating the tuning signal from the difference value.

5. Desynchronisation device according to Claim 3, where the means of clock generation contains a numerically controlled oscillator (NCO).

6. Method for obtaining a useful signal (OUT) from a synchronous digital input signal (IN), with the following steps:
- Receiving the synchronous digital input signal (IN) at a desynchronisation device,
- Writing a payload of the input signal (IN) into a buffer memory (BUF) of the desynchronisation device,
- Producing a regenerated clock signal (RCLK) and
- Reading out the buffer memory (BUF) with the regenerated clock signal (RCLK) to obtain the useful signal (OUT),
**characterised by** the following steps:
- Determination of a mean value over the interval between two pointer actions of the input signal (IN),
- Derivation of a tuning signal from the mean value and
- Adjustment of the regenerated clock signal with the tuning signal.

## Revendications

1. Système de désynchronisation pour un système numérique synchrone de transmission d'information pour générer un signal utile (OUT) à partir d'un signal d'entrée (IN) numérique synchrone, qui présente une mémoire tampon (BUF) pour le stockage intermédiaire du signal d'entrée (IN), un moyen d'écriture pour l'écriture du signal d'entrée dans la mémoire tampon (BUF), un moyen de génération de rythme pour générer un signal de rythme régénéré (RCLK) et un moyen de lecture pour lire la mémoire tampon (BUF) avec le signal de rythme régénéré (RCLK), **caractérisé en ce que** le moyen de génération de rythme contient un moyen de calcul (DET, DIF, CTR1, CTR2) pour déterminer une valeur moyenne par rapport à l'intervalle entre deux actions du curseur du signal d'entrée (IN) et pour déduire un signal d'accord à partir de la valeur moyenne qui sert à équilibrer le signal de rythme régénéré (RCLK).

2. Système de désynchronisation selon la revendication 1, sur lequel il est prévu en supplément un filtre passe-bas (TP ; DTP) pour le filtrage du signal d'accord déduit de la valeur moyenne.

3. Système de désynchronisation selon la revendication 1, sur lequel le moyen de calcul contient les ensembles suivants :
- un dispositif de détection (DET) pour détecter les actions du curseur apparaissant dans le signal d'entrée,
- un premier compteur (CTR1) pour le comptage des impulsions d'un signal de rythme d'écriture (WCLK),
- un second compteur (CTR2) pour le comptage des impulsions du signal de rythme régénéré (RCLK), et
- un additionneur (DIF) pour la soustraction des indications des deux compteurs (CTR1, CTR2) pour former une différence,
les deux compteurs étant reliés respectivement au moyen d'une ligne de remise à zéro au dispositif de détection (DET), de sorte que les deux compteurs (CTR1, CTR2) sont remis à zéro en cas d'apparition d'une action de curseur.

4. Système de désynchronisation selon la revendication 3, sur lequel le moyen de génération de rythme contient un oscillateur (VCO) commandé par tension et un convertisseur numérique/analogique (D/A) pour générer le signal d'accord à partir de la différence.

5. Système de désynchronisation selon la revendication 3, sur lequel le moyen de génération de rythme contient un oscillateur (NCO) contrôlé numériquement.

6. Procédé pour obtenir un signal utile (OUT) à partir d'un signal d'entrée (IN) numérique synchrone comprenant les étapes suivantes :
- réception du signal d'entrée (IN) numérique synchrone sur un système de désynchronisation,
- entrée d'une charge utile du signal d'entrée (IN) dans une mémoire tampon (BUF) du système de désynchronisation,
- génération d'un signal de rythme (RCLK) régénéré, et
- lecture de la mémoire tampon (BUF) avec le signal de rythme (RCLK) régénéré pour obtenir le signal utile (OUT),
**caractérisé par** les étapes suivantes :
- calcul d'une valeur moyenne par rapport à l'intervalle entre deux actions du curseur du signal d'entrée (IN),
- déduction d'un signal d'accord à partir de la valeur moyenne, et
- ajustement du signal de rythme régénéré avec le signal d'accord.
